# EUROPÄISCHE PATENTSCHRIFT

(11) **EP 1 928 230 B1**
(45) Veröffentlichungstag und Bekanntmachung des Hinweises auf die Patenterteilung: **31.03.2010**
(21) Anmeldenummer: 06791856.5
(22) Anmeldetag: 06.09.2006
(51) Int. Cl.: A01N 25/02, A01N 43/80, A01N 31/02, A01N 37/34, A01N 35/00, A01P 1/00

(54) **BIOZIDE ZUSAMMENSETZUNGEN**
BIOCIDAL COMPOSITIONS
COMPOSITIONS BIOCIDES

(30) Priorität: 21.09.2005 DE 102005045002
(43) Veröffentlichungstag der Anmeldung: 11.06.2008
(73) Patentinhaber: Clariant Produkte (Deutschland) GmbH, 65929 Frankfurt am Main (DE)
(72) Erfinder: FALK, Uwe, 63486 Bruchköbel (DE); WALTER, Michael, Marcus, 65835 Liederbach (DE)
(74) Vertreter: Paczkowski, Marcus
(86) Internationale Anmeldenummer: PCT/EP2006/008667
(87) Internationale Veröffentlichungsnummer: WO 2007/033764

(56) Entgegenhaltungen:
- EP-A1- 0 824 144
- EP-A1- 1 122 286
- WO-A-00/06675
- WO-A-01/41570
- WO-A-02/067685
- WO-A-03/106592
- CA-A1- 1 189 343
- DE-A1- 19 508 654
- DE-A1- 19 636 114
- US-A- 4 272 636
- US-A- 4 624 972
- US-A- 6 080 706
- DATABASE WPI Week 199828 Derwent Publications Ltd., London, GB; AN 1998-316651 XP002431318 & JP 10 114605 A (TAKEDA CHEM IND LTD) 6. Mai 1998 (1998-05-06) -& DATABASE EPODOC EUROPEAN PATENT OFFICE, THE HAGUE, NL; XP002431314 -& JP 10 114605 A 6. Mai 1998 (1998-05-06)
- DATABASE WPI Week 200426 Derwent Publications Ltd., London, GB; AN 2004-273527 XP002431319 & JP 2004 051711 A (FUJI PHOTO FILM CO LTD) 19. Februar 2004 (2004-02-19)
- DATABASE WPI Week 200441 Derwent Publications Ltd., London, GB; AN 2004-433707 XP002431320 & JP 2004 123905 A (SEIKO EPSON CORP) 22. April 2004 (2004-04-22)
- ANON.: "452015 Composition" RESEARCH DISCLOSURE., Dezember 2001 (2001-12), XP002431313 GBMASON PUBLICATIONS, HAMPSHIRE.

## Beschreibung

Die vorliegende Erfindung betrifft biozide Zusammensetzungen, enthaltend mindestens eine biozide Wirksubstanz und mindestens ein Lösemittel aus der Gruppe der Polyglykolmonobutylether, und deren Verwendung als Konservierungs- und Desinfektionsmittel.

Biozide kommen in unterschiedlichsten Anwendungsgebieten zum Einsatz, um das Wachstum von Mikroorganismen zu kontrollieren oder zu verhindern, und damit die Konservierung von Produkten und Materialien zu gewährleisten. Wichtige Anwendungsgebiete sind die Konservierung von Acrylfarben oder wasserbasierenden Klebemitteln, oder die Oberflächenbehandlung.

An biozide Formulierungen werden bezüglich der chemischen und physikalischen Stabilität unter extremen Temperaturbedingungen bei langen Lagerzeiten hohe Anforderungen gestellt. Auch bei Temperaturen unterhalb von 0°C sollen Phasentrennung, ein Auskristallisieren einzelner Inhaltsstoffe, sowie Gelbildung unterbleiben.

In zahlreichen Schriften wird der Einsatz von Butylethern zum Lösen von Bioziden offenbart.

In DE-A- 36 04 521 werden Monobutylether von Ethylenglykol in bioziden Formulierungen verwendet.

In WO 2001/041 570 werden Zusammensetzungen offenbart, die Bakterizide und Fungizide, gelöst in Diethylenglykolbutylether, enthalten. Die Verwendung von Diethylenglykolbutjrlether als Lösemittel in bioziden Formulierungen ist weiterhin in EP-A-1 290 943, WO-02/067 685 und GB-2 250 737 offenbart.

WO-02/50225 offenbart die Verwendung von Propylenglykolmono-n-butylether als Lösemittel für biozide Wirkstoffe.

DE-A-199 28 127 offenbart ein Verfahren zur Herstellung von Siloxanquats, bei dem einfach und doppelt endgruppenverschlossene Glykole als Lösemittel bei der Reaktion verwendet werden.

JP2004051711 beschreibt eine Lösung zur Tintenhestellung, die 0,35% 1,2-Benzisothiazolon und 18% Triethylenglykolmonobutylether enthält. WO0006675 beschreibt die Verwendung von Glykolen wie Ethylenglykol, Butyltriglykol und bestimmten Fettalkoholen als Lösungsvermittler für Wirkstoffe in Kühlschmierstoffkonzentraten.

Sowohl Monoethylenglykol- als auch Diethylenglykolbutylether neigen bei Temperaturen unterhalb von 0°C zur Kristallbildung.

Die Aufgabe vorliegender Erfindung war es daher, Lösemittel zu finden, die biozide Wirksubstanzen gut zu lösen vermögen, toxikologisch und ökotoxikologisch unbedenklich sind, und auch bei Temperaturen unterhalb von 0°C keine Kristall- oder Gelbildung zeigen.

Überraschend wurde nun gefunden, dass bestimmte toxikologisch und ökotoxikologisch unbedenkliche Glykole aus der Gruppe der Polyglykolmonobutylether 1,2-Benzisothiazolin-3-on und/oder ihr Alkali- oder Ammoniumsalz zu lösen vermögen, die Kompatibilität dieser Inhaltsstoffe biozider Formulierungen (biozide Wirksubstanz/en, Adjuvants, Dispergiermittel, Elektrolyte etc.) mit sehr unterschiedlichen physikalisch-chemischen Eigenschaften verbessern, auch unter starker Temperaturbelastung stabil sind und ein Auskristallisieren dieser bioziden Wirksubstanz bei tiefen Temperaturen verhindern. Sehr vorteilhaft ist das Viskositätsverhalten der bioziden Formulierungen, enthaltend Polyglykolmonobutylether bei Temperaturen unterhalb 0°C.

Gegenstand der Erfindung sind daher Zusammensetzungen, enthaltend
a) 5 bis 80 Ges.-% 1,2-Benzisothiazolin-3-on und/oder ihr Alkali- oder Ammoniumsalz,
b) 15 bis 80 Gew.-% mindestens eines Lösemittels gemäß der Formel I

   R-(O-CH₂-CH₂)ₓ-O-H (I)
worin
- R: für eine lineare oder verzweigte Butylgruppe und
- x: für eine Zahl von 3 bis 10 steht.

Ein weiterer Gegenstand der Erfindung ist die Verwendung von 15 bis 80 Gew.-% mindestens einer Verbindung der Formel (I), wie in einem oder mehreren der Ansprüche 1 bis 5 definiert, als Lösemittel für biozide Wirksubstanzen, welche 1,2-Benzisothiazolin-3-on und/oder ihr Alkati- oder Ammoniumsalz enthalten, so dass 5 bis 80 Gew.-% 1,2-Benzisothiazolin-3-on und/oder ihr Alkali- oder Ammoniumsalz in der Lösung enthalten sind.

Ein weiterer Gegenstand der Erfindung ist ein Verfahren zur Herstellung einer Lösung von 5 bis 80 Gew.-% 1,2-Benzisothiazolin-3-on und/oder ihres Alkali- oder Ammoniumsalzes indem man die biozide Wirksubstanz in 15 bis 80 Gew.-% eines oder mehrerer Butylpolyglykolethers der Formel I auflöst.

R steht vorzugsweise für n-Butyl.

x steht vorzugsweise für eine Zahl von 3 bis 6.

Weiterhin bedeuten in einer bevorzugten Ausführungsform gleichzeitig R n-Butyl und x eine Zahl von 3 bis 6.

In einer weiteren bevorzugten Ausführungsform ist die Verbindung der Formel I eine Mischung, welche 50 Gew.-% oder mehr, bevorzugt 60 Gew.-% oder mehr, besonders bevorzugt 70 Gew.-% oder mehr Triethylenglykolbutylether und 10 Gew.-% oder mehr, vorzugsweise 15 Gew.-% oder mehr, Tetraethylenglykolbutylether enthält. Weiterhin besonders bevorzugt ist diese Ausführungsform mit einem n-Butylrest.

Es ist ferner bevorzugt, dass die Verbindung der Formel 1 weniger als 20, vorzugsweise weniger als 10, insbesondere weniger als 5, speziell weniger als 3 Gew.-% Diethylenglykolbutylether enthält.

In einer weiteren bevorzugten Ausführungsform haben die Verbindungen der Formel I einen Siedepunkt größer oder gleich 240°C, oder, wenn Gemische von Verbindungen der Formel I verwendet werden, einen Siedebereich von oberhalb 240°C.

Isothiazoline mit biozider Wirksamkeit sind 1,2-Benzisothiazolin-3-on oder sein Alkali- oder Ammoniumsalz.

Das Isothiazolin ist 1,2-Benzoisothiazolin-3-on und/oder sein Alkali- oder Ammoniumsalz, insbesondere sein Natriumsalz.

### 1,2-Benzisothiazolin-3-on entspricht der Formel

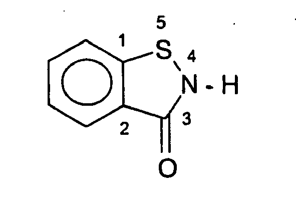

In einer bevorzugten Ausführungsform der Erfindung wird mehr als ein Isothiazolin in Butylpolyglykolethern gemäß der Formel (I) gelöst. Es kann sich dabei vorzugsweise um eine Mischung aus 2 nicht halogenierten Isothiazolinen, oder um eine Mischung aus einem nicht halogenierten und einem halogenierten Isothiazolin handeln.

In einer besonders bevorzugten Ausführungsform der Erfindung wird 5 bis 80 Gew.-% 1,2-Benzisothiazolin-3-on und/oder das 1,2-Benzisothiazolin-3-on-Alkalisalz oder Ammoniumsalz , insbesondere das Natriumsalz, in 15 bis 80 Gew.-% mindestens einem in Butylpolyglykolether gemäß der Formel (I) gelöst, wobei die Herstellung der Lösung in der Weise erfolgt, dass eine auf ca. 60 - 70°C erwärmte Lösung aus Butylpolyglykolether gemäß der Formel (I) und Alkali- oder Ammoniumhydroxid mit 1,2-Benzisothiazolin-3-on zu einer klaren Lösung homogenisiert wird, wobei das molare Verhältnis von 1,2-Benzisothiazolin-3-on zum Hydroxid im Bereich von 1 zu 0,5 bis1,5, bevorzugt 1 zu 0,6 bis 1,2, besonders bevorzugt 1 zu 0,75 -1,05 liegt.

Die erfindungsgemäßen Zusammensetzungen können in einer bevorzugten Ausführungsform neben 1,2-Benzisothiazolin-3-on un/oder seiner Alkali- der Ammoniumsalz mindestens eine weitere biozide Wirksubstanz enthalten, die kein Isothiazolin ist. Bevorzugte weitere biozide Wirksubstanzen sind Triazine, beispielsweise 1,3,5-Tris(2-hydroxyethyl)-hexahydro-S-triazin, 1,5-Trimethyl-[2H,4H,6H]-Hexahydro-1,3,5-S-Triazin, Methylen-bis-morpholin, Oxazolidin, 3-lodo-2-Propynylbutylcarbamat, 2-Bromo-2-Nitropropandiol, Glutaraldehyd, Glutardialdehyd, Natrium 2-Pyridinethiol-1-oxid, p-Hydroxybenzoesäurealkylester, Tris(hydroxymethyl)nitromethan, Dimethyloldimethylhydantoin, 1,6-Dihydroxy-2,5-dioxahexan; 1,2-Dibromo-2,4-dicyanobutan; 3-(3,4-dichlorphenyl)-1,1-dimethylharnstoff (Diuron); N-cyclopropyl-N'-(1,1-dimethylethyl)-6-(methylthio)-1,3,5-triazin-2,4-diamin; Methylbenzimidazol-2-ylcarbamat (Carbendazim); N-(1,1-dimethylethyl)-N'-ethyl-6-(methylthio)-1,3,5-triazin-2,4-diamin (Terbutryn); 4-Chloro-3,5-dimethylphenol; 2,4-Dichloro-3,5-dimethylphenol; 2-Benzyl-4-chlorphenol; 2,2'-Dihydroxy-5,5'-dichloro-diphenyl-methan; p-tertiär-amylphenol; o-Phenylphenol; Natrium-o-phenylphenol; p-Chloro-m-cresol; 2-(Thiocyanomethylthio)-benzthiazol; 3,4,4'-Trichlorcarbanilid; 1-Hydroxy-2-pyridinthion-Zink; 1-(4-Chlorphenyl)-4,4-dimethyl-3-(1H-1,2,4-triazol-1-ylmethyl)-pentan-3-ol (Tebuconazol), 1-[2-(2,4-dichlorphenyl)-4-propyl-1,3-dioxolan-2-ylmethyl)-1H-1,2,4-triazol (Propiconazol), 3-Iodo-2-Propynylbutylcarbamat, 2-Bromo-2-Nitropropandiol, Formaldehyd; Harnstoff; Glyoxal; 2,2'-Dithio-bis-(pyridine-N-oxid), 3,4,4-Trimethyloxazolidin, 4,4-Dimethyloxazolidin, N-hydroxy-methyl-N-methyldithiocarbamat, Kaliumsalz Adamantan, N-Trichloromethyl-thiophthalimid, 2,4,5,6-Tetrachloroisophthalonitril, 2,4,5-Trichlorophenol, dehydroacetic acid, Kupfernaphthenat, Kupferoctoat, Tributylzinnoxid, Zinknaphthenat, Kupfer-8-quinolat.

Des Weiteren kommen Biozide aus der Gruppe der quaternären Ammoniumverbindungen in Betracht, bevorzugt Alkyldimethylammoniumchloride, wie beispielsweise Cocosdimethylammoniumchlorid, Dialkyldimethylammoniumchloride, wie beispielsweise Dicocosdimethylammoniumchlorid, Alkyldimethylbenzyl-ammoniumchloride, wie beispielsweise C_{12/14}-Dimethylbenzylammoniumchlorid oder Cocosdimethyldichlorobenzylammoniumchlorid.

Ein bevorzugter Gegenstand der Erfindung sind Zusammensetzungen, enthaltend,
a) mindestens 1,2-Benzisothiazolin-3-on und/oder sein Alkali- oder Ammoniumsalz mit biozider Wirksamkeit in Gewichtsmengen von 10 % bis 60 %, bevorzugt 30 % bis 55 %, besonders bevorzugt 40 % bis 52 % bezogen auf die biozide Zusammensetzung, und
b) 15 bis 80 Gew.-% mindestens eines Lösungsmittels gemäß Formel I.

Ein weiterer bevorzugter Gegenstand der Erfindung sind Zusammensetzungen, enthaltend
a) mindestens 1,2-Benzisothiazolin-3-on und/oder sein Alkali- oder Ammoniumsalz mit biozider Wirksamkeit in Gewichtsmengen von 10 % bis 60 %, bevorzugt 30 % bis 55 %, besonders bevorzugt 40 % bis 52 % bezogen auf die biozide Zusammensetzung, und
b) mindestens ein halogeniertes Isothiazolin mit biozider Wirksamkeit in Gewichtsmengen von 0,1 bis 15 Gew.-%, bevorzugt 0,2 bis 10 Gew.-%, besonders bevorzugt 0,3 bis 5 Gew.-% bezogen auf die biozide Zusammensetzung, und
c) 15 bis 80 Gew.-% mindestens eines Lösungsmittels gemäß Formel I.

Ein weiterer bevorzugter Gegenstand der Erfindung sind Zusammensetzungen, enthaltend
a) mindestens 1,2-Benzisothiazolin-3-on und/oder sein Alkali- oder Ammoniumsalz mit biozider Wirksamkeit in Gewichtsmengen von 10 % bis 60 %, bevorzugt 30 % bis 55 %, besonders bevorzugt 40 % bis 52 % bezogen auf die biozide Zusammensetzung, und
b) mindestens ein halogeniertes Isothiazolin mit biozider Wirksamkeit in Gewichtsmengen von 0,1 Gew.-% bis 15 Gew.-%, bevorzugt 0,2 Gew.-% bis 10 Gew.-%, besonders bevorzugt 0,3 Gew.-% bis 5 Gew.-% bezogen auf die biozide Zusammensetzung,
c) mindestens eine weitere biozide Wirksubstanz in Gewichtsmengen von 3 bis 15 Gew.-%, bevorzugt 7 bis 13 Gew.-%, besonders bevorzugt 9 bis 12 Gew.-% bezogen auf die biozide Zusammensetzung,
   und
c) 15 bis 80 Gew.-% mindestens eines Lösungsmittels gemäß Formel I.

Ein weiterer bevorzugter Gegenstand der Erfindung sind Zusammensetzungen, enthaltend
a) 5 bis 80 Gew.-% 1,2-Benzoisothiazolin-3-on
b) Chlor-2-methyl-4-isothiazolin-3-on
c) 2-Methyl-4-isothiazolin-3-on
d) 1,6-Dihydroxy-2,5-dioxahexan
e) 15 bis 80 Gew.-% mindestens eines Lösungsmittels gemäß Formel I.

Die erfindungsgemäßen Zusammensetzungen können in bevorzugter Ausführungsform neben den erfindungsgemäß eingesetzten Butylpolyglykolethern gemäß der Formel (I) bis zu 40 Gew.-%, vorzugsweise bis 30 Gew.-% weitere Lösemittel enthalten. Solche weiteren Lösemittel aus der Gruppe der
- Glykole sind beispielsweise Ethylenglykol, Diethylenglykol, Triethylenglykol, Tetraethylenglykol, Polyethylenglykol, Propylenglykol, Dipropylenglykol, Tripropylenglykol, Polypropylenglykol,
   endgruppenverschlossene Glykole sind beispielsweise Monoethylenglykoldimethylether (Monoglyme), Diethylenglykoldimethylether (Diglyme), Triethylenglykoldimethylether (Triglyme), Triethylenglykoldiethylether, Tetraethylenglykoldimethylether und Tetraethylenglykoldiethylether, Propylenglykolphenylether, Polyethylenglykoldibutylether ; Polyethylenglykoldiallylether; Polyethylenglykolallylmethylether; Polyalkylenglykole; Polyalkylenglykolallylmethylether,
- Alkohole sind beispielsweise Methanol, Ethanol, n-Propanol, i-Propanol, n-Butanol, i-Butanol, t-Butanol, n-Pentanol, n-Hexanol,2-Methoxyethanol, 2-Butoxyethanol, 2-(2-Butoxyethoxyl)ethanol, Phenoxyethanol, 2-(2-Butoxyethoxyl)ethanol, 3-Methoxybutanol, 1-Methoxy-2-propanol, sec-Butylalkohol, tert-Butylalkohol, iso-Butylalkohol, 2-Ethylhexanol, 2-Propoxyethanol, Benzylalkohol, Phenethylalkohol, 1,2,6-Hexantriol,
- Alkane sind beispielsweise, Pentan, Hexan, Heptan,
- chlorierten Alkane sind beispielsweise Methylenchlorid, Ethylendichlorid;
- Aromaten sind beispielsweise Benzol, Toluol, Xylol;
- Nitrile ist beispielsweise Acetonitril;
- Amide sind beispielsweise Dimethylformamid, N,N-Dimethylacetamid, Hexamethylphosphoramid;
- Ketone sind beispielsweise Aceton, Ethylmethylketon, Methylisobutylketon, Methylisobutylketon, Methylamylketon, Methylisoamylketon, 2-Butanon,
- Ether ist beispielsweise Isopropylether,
- Acetate ist beispielsweise Ethylacetat, Propylacetat, i-Propylacetat, Butylacetat, i-Butylacetat, 2-Methoxyethylacetat, 1-Methoxy-2-propylacetat, Ethylenglykoldiacetat,
- Lactate sind beispielsweise Methyllactat, Ethyllactat,
- Phosphate sind beispielsweise
   Trihexyl(tetradecyl)phosphoniumhexafluorophosphat,
   Trihexyl(tetradecyl)phosphoniumtetrafluorophosphat,
- Amine sind beispielsweise Monoethanolamin, Diethanolamin, Triethanolamin,
- Polyole sind beispielsweise Glycerin, Trimethylolethan, Trimethylolpropan,
sowie ferner Tetrahydrofuran, 1,4-Dioxan, Dimethylsulfoxid, Diethylcarbonat, Propylencarbonat, Pyridin, Picolin, Lutidin, Collidin, Cyclohexanon und/oder Wasser.

Erfindungsgemäß können die bioziden Zusammensetzungen bis zu 80 Gew.-%, bevorzugt 5 bis 60 Gew.-%, besonders bevorzugt bis 30 Gew.-% 1,2-Benzisothiazolin-3-on und/oder seines Alkali- oder Ammoniumsalzes und 15 Gew.-% bis 80 Gew.-%, besonders bevorzugt 20 bis 70 Gew.-% eines oder mehrerer der oben genannten Butylpolyglykolethern, gemäß der Formel I, bezogen auf die fertigen bioziden Zusammensetzungen, enthalten. Diese werden üblicherweise in solchen Gewichtsmengen zur Anwendung gebracht, dass von 0,0001 Gew.-% bis 5 Gew.-%, bevorzugt 0,0002 Gew.-% bis 3 Gew.-%, besonders bevorzugt von 0,0005 Gew.-% bis 1 Gew.-% des oder der bioziden Wirkstoffe, bezogen auf das zu behandelnde Substrat oder das behandelte Endprodukt, zur Anwendung kommen.
Die erfindungsgemäßen bioziden Zusammensetzungen können gegebenenfalls Emulgatoren oder Dispergiermittel enthalten.

Als Dispergiermittel und Emulgator eignen sich Anlagerungsprodukte von 2 bis 30 Mol Ethylenoxid und/oder bis zu 5 Mol Propylenoxid an lineare Fettalkohole mit 8 bis 22 C-Atomen, an Fettsäuren mit 12 bis 22 C-Atomen und an Alkylphenole mit 8 bis 15 C-Atomen in der Alkylgruppe; C₁₂-C₁₈-Fettsäuremono- und -diester von Anlagerungsprodukten von 1 bis 30 Mol Ethylenoxid an Glycerin; Glycerinmono- und -diester und Sorbitanmono- und -diester von gesättigten und ungesättigten Fettsäuren mit 6 bis 22 Kohlenstoffatomen und deren Ethylenoxidanlagerungsprodukten; Anlagerungsprodukte von 15 bis 60 Mol Ethylenoxid an Rizinusöl und/oder gehärtetes Rizinusöl; Polyol- und insbesondere Polyglycerinester wie z.B. Polyglycerinpolyricinoleat und Polyglycerinpoly-12-hydroxystearat. Bevorzugte flüssige Fettsäureester sind PEG-10 Polyglyceryl-2 Laurate und Polyglyceryl-2 Sesquiisostearate.

Des weiteren geeignet sind ethoxylierte und nicht ethoxylierte mono-, di- oder tri-Alkylphosphorsäureester und Alkylarylphosphorsäureester , beispielsweise, Isotridecylphosphorsäureester und deren Salze, Tri-secbutylphenolphosphorsäureester und deren Salze und Tristyrylphenylphosphorsäureester und deren Salze.

Auch kationische Emulgatoren wie mono-, di- und tri-Alkylquats und deren polymere Derivate können eingesetzt werden.

Ebenfalls geeignet sind Gemische von Verbindungen aus zwei oder mehreren dieser Substanzklassen. Die Anlagerungsprodukte von Ethylenoxid und/oder Propylenoxid an Fettalkohole, Fettsäuren, Alkylphenole, Glycerin mono- und -diester sowie Sorbitanmono- und -diester von Fettsäuren oder an Rizinusöl stellen bekannte, im Handel erhältliche Produkte dar. Es handelt sich dabei um Homologengemische, deren mittlerer Alkoxilierungsgrad dem Verhältnis der Stoffmengen von Ethylenoxid und/oder Propylenoxid und Substrat, mit denen die Anlagerungsreaktion durchgeführt wird, entspricht.

Die erfindungsgemäßen bioziden Zusammensetzungen können, 0,1 bis 40 Gew.-%, bevorzugt 1 bis 30 Gew.-%, besonders bevorzugt 3 bis 20 Gew.-% eines oder mehrerer Emulgatoren oder Dispergatoren, bezogen auf die fertigen bioziden Zusammensetzungen enthalten.

Die erfindungsgemäßen bioziden Zusammensetzungen können zusätzlich Tenside, Verdickungsmittel, Antigelmittel, Lösungsvermittler, Kälteschutzmittel, Antischaummittel, Puffer, Netzmittel, Komplexbildner, Sequestriermittel, Elektrolyte, Stellmittel, Duftstoffe und Farbstoffe enthalten.
In einer weiteren Ausführungsform können die erfindungsgemäßen Mittel anionische Tenside enthalten.

Bevorzugte anionische Tenside sind geradkettige und verzweigte Alkylsulfate, -sulfonate, -carboxylate, -phosphate, -sulphosuccinate und -taurate, Alkylestersulfonate, Arylalkylsulfonate und Alkylethersulfate.

Alkylsulfate sind wasserlösliche Salze oder Säuren der Formel ROSO₃M, worin R bevorzugt einen C₁₀-C₂₄-Kohlenwasserstoffrest, besonders bevorzugt einen Alkyl- oder Hydroxyalkylrest mit 10 bis 20 C-Atomen und insbesondere bevorzugt einen C₁₂-C₁₈-Alkyl- oder Hydroxyalkylrest darstellt. M ist Wasserstoff oder ein Kation, vorzugsweise ein Alkalimetallkation (z.B. Natrium, Kalium, Lithium) oder Ammonium oder substituiertes Ammonium, z.B. ein Methyl-, Dimethyl- und Trimethylammoniumkation oder ein quaternäres Ammoniumkation, wie Tetramethylammonium- und Dimethylpiperidiniumkation und quartäre Ammoniumkationen, abgeleitet von Alkylaminen wie Ethylamin, Diethylamin, Triethylamin und deren Mischungen.

Die Alkylethersulfate sind wasserlösliche Salze oder Säuren der Formel RO(A)ₘSO₃M, worin R bevorzugt einen unsubstituierten C₁₀-C₂₄-Alkyl- oder Hydroxyalkylrest, besonders bevorzugt einen C₁₂-C₂₀-Alkyl- oder Hydroxyalkylrest und insbesondere bevorzugt einen C₁₂-C₁₈-Alkyl- oder Hydroxyalkylrest darstellt. A ist eine Ethoxy- oder Propoxyeinheit, m ist eine Zahl von größer als 0, typischerweise zwischen 0,5 und 6, besonders bevorzugt zwischen 0,5 und 3 und M ist ein Wasserstoffatom oder ein Kation, vorzugsweise ein Metallkation (z.B. Natrium, Kalium, Lithium, Calcium, Magnesium), Ammonium oder ein substituiertes Ammoniumkation. Beispiele für substituierte Ammoniumkationen sind Methyl-, Dimethyl-, Trimethylammonium- und quaternäre Ammoniumkationen wie Tetramethylammonium und Dimethylpiperidiniumkationen, sowie solche, die von Alkylaminen, wie Ethylamin, Diethylamin, Triethylamin oder Mischungen davon, abgeleitet sind. Als Beispiele seien genannt C₁₂-C₁₈-Alkyl-polyethoxylat-(1,0)sulfat, C₁₂-C₁₈-Alkyl-polyethoxylat-(2,25)sulfat, C₁₂-C₁₈-Alkyl-polyethoxylat-(3,0)sulfat, C₁₂-C₁₈-Alkyl-polyethoxylat-(4,0)sulfat, wobei das Kation Natrium oder Kalium ist.

Ebenso geeignet sind Alkylsulfonate mit geradkettigen oder verzweigten C₆-C₂₂-Alkylketten, beispielsweise primäre Paraffinsulfonate, sekundäre Paraffinsulfonate, Alkylarylsulfonate, beispielsweise lineare Alkylbenzolsulfonate mit C₅-C₂₀-Alkylketten, Alkylnaphthalensulfonate, Kondensationsprodukte aus Naphthalensulfonat und Formaldehyd, Lignosulfonat, Alkylestersulfonate, d.h. sulfonierte lineare Ester von C₈-C₂₀-Carboxylsäuren (d.h. Fettsäuren), C₈-C₂₄-Olefinsulfonate, sulfonierte Polycarboxylsäuren, hergestellt durch Sulfonierung der Pyrolyseprodukte von Erdalkalimetallcitraten.

Weitere geeignete anionische Tenside sind ausgewählt aus Alkylglycerinsulfaten, Fettacylglycerinsulfaten, Oleylglycerinsulfaten, Alkylphenolethersulfaten, Alkylphosphaten, Alkyletherphosphaten, Isethionaten wie Acylisethionaten, N-Acyltauriden, Alkylsuccinamaten, Sulfosuccinaten, insbesondere Di-nonyl- oder Di-octyl-sulphosuccinate, Monoester der Sulfosuccinate (besonders gesättigte und ungesättigte C₁₂-C₁₈-Monoester) und Diestern der Sulfosuccinate (besonders gesättigte und ungesättigte C₁₂-C₁₈-Diester), Acylsarcosinaten, Sulfaten von Alkylpolysacchariden wie Sulfaten von Alkylpolyglycosiden, verzweigten primären Alkylsulfaten und Alkylpolyethoxycarboxylaten wie denen der Formel RO(CH₂CH₂O)ₖCH₂COO⁻M⁺ worin R eine C₈-C₂₂-Alkylgruppe, k eine Zahl von 0 bis 10 und M ein lösliches, Salz bildendes Kation ist.

Als nichtionische Tenside kommen vorzugsweise Fettalkoholethoxylate (Alkylpolyethylenglykole), Alkylphenolpolyethylenglykole, Alkylmercaptanpolyethylen-glykole, Fettaminethoxylate (Alkylaminopolyethylenglykole), Fettsäureethoxylate (Acylpolyethylenglykole), Polypropylenglykolethoxylate (z.B. Pluronics^{®}), Fettsäurealkylolamide (Fettsäureamidpolyethylenglykole), N-Alkyl- und N-Alkoxypolyhydroxyfettsäureamide, Alkylpolysaccharide, Saccharoseester, Sorbitester und Polyglykolether in Betracht.

Als amphotere Tenside kommen vorzugsweise Amphoacetate, besonders bevorzugt Monocarboxylate und Dicarboxylate wie Cocoamphocarboxypropionat, Cocoamidocarboxypropionsäure, Cocoamphocarboxyglycinat (oder auch als Cocoamphodiacetat bezeichnet) und Cocoamphoacetat in Betracht.

Als kationische Tenside kommen beispielsweise Di-(C₁₀-C₂₄)-Alkyldimethylammoniumchlorid oder -bromid, vorzugsweise Di-(C₁₂-C₁₈)-Alkyldimethylammoniumchlorid oder -bromid; (C₁₀-C₂₄)-Alkyl-dimethylethylammoniumchlorid oder -bromid; (C₁₀-C₂₄)-Alkyl-trimethylammoniumchlorid oder -bromid, vorzugsweise Cetyltrimethylammoniumchlorid oder -bromid und (C₂₀-C₂₂)-Alkyl-trimethylammoniumchlorid oder -bromid; (C₁₀-C₂₄)-Alkyldimethylbenzylammoniumchlorid oder -bromid, vorzugsweise (C₁₂-C₁₈)-Alkyl-dimethylbenzylammoniumchlorid; N-(C₁₀-C₁₈)-Alkyl-pyridiniumchlorid oder -bromid, vorzugsweise N-(C₁₂-C₁₆)-Alkyl-pyridiniumchforid oder -bromid; N-(C₁₀-C₁₈)-Alkyl-isochinoliniumchlorid, -bromid oder -monoalkylsulfat; N-(C₁₂-C₁₈)-Alkylpolyoylaminoformylmethyl-pyridiniumchlorid; N-(C₁₂-C₁₈)-Alkyl-N-methylmorpholinium-chlorid, -bromid oder -monoalkylsulfat; N-(C₁₂-C₁₈)-Alkyl-N-ethyl-morpholinium-chlorid, -bromid oder -monoalkylsulfat; (C₁₆-C₁₈)-Alkyl-pentaoxethyl-ammonium-chlorid; Diisobutylphenoxyethoxyethyldimethylbenzylammonium-chlorid; Salze des N,N-Diethylamino-ethylstearylamids und -oleylamids mit Salzsäure, Essigsäure, Milchsäure, Zitronensäure, Phosphorsäure; N-Acyl-aminoethyl-N,N-diethyl-N-methyl-ammoniumchlorid, -bromid oder -monoalkylsulfat und N-Acylaminoethyl-N,N-diethyl-N-benzyl-ammonium-chlorid, -bromid oder -monoalkylsulfat, wobei Acyl vorzugsweise für Stearyl oder Oleyl steht, in Betracht.

Die erfindungsgemäßen bioziden Zusammensetzungen können 0,1 bis 40 Gew.-%, bevorzugt 1 bis 30 Gew.-%, besonders bevorzugt 3 bis 20 Gew.-% eines oder mehrere Tenside, bezogen auf die fertigen bioziden Zusammensetzungen, enthalten.

Als Verdickungsmittel werden bevorzugt Carboxymethylcellulose und Hydroxyethylcellulose, Xanthan-Gum, Guar-Guar, Agar-Agar, Alginate und Tylosen, ferner höhermolekulare Polyethylenglykolmono- und -diester von Fettsäuren, gehärtetes Rizinusöl, Salze von langkettigen Fettsäuren, beispielsweise Natrium-. Kalium-, Aluminium-, Magnesium- und Titan-Stearate oder die Natrium und/oder Kalium-Salze der Behensäure, aber auch Polyacrylate, Polyvinylalkohol und Polyvinylpyrrolidon, sowie Polysaccharide, eingesetzt. Ebenso geeignet sind Copolymere auf Basis von Acryloyldimethyltaurinsäure, wie in EP-A-1 060 142, EP-A-1 028 129, EP-A-1 116 733 beschrieben.

Die Verdickungsmittel können in den erfindungsgemäßen bioziden Zusammensetzungen vorzugsweise in Mengen von 0,01 bis 5 Gew.-% und insbesondere in Mengen von 0,5 bis 2 Gew.-%, bezogen auf die fertigen bioziden Zusammensetzungen, eingesetzt werden.

Geeignete Lösungsvermittler sind Natriumtoluolsulphonat, Natriumcumolsulphonat, Natriumxylolsulphonat, Alkanphosphonsäuren und Alkenyldicarbonsäuren sowie deren Anhydride.

Als Kältestabilisatoren können alle üblichen für diesen Zweck einsetzbaren Stoffe fungieren. Beispielhaft seien Harnstoff, Glycerin und Propylenglykol genannt. Wasserstoffperoxid kann jedes anorganische Peroxid sein, das in wässriger Lösung Wasserstoffperoxid freisetzt, wie etwa Natriumperborat (Monohydrat und Tetrahydrat) und Natriumpercarbonat.

Als Entschäumer eignen sich Fettsäurealkylesteralkoxylate; Organopolysiloxane wie Polydimethylsiloxane und deren Gemische mit mikrofeiner, gegebenenfalls silanierter Kieselsäure; Paraffine; Wachse und Mikrokristallinwachse und deren Gemische mit silanierter Kieselsäure. Vorteilhaft sind auch Gemische verschiedener Schauminhibitoren, beispielsweise solche aus Silikonöl, Paraffinöl und/oder oder Wachsen.

Als Puffer kommen alle üblichen Säuren und deren Salze in Frage. Vorzugsweise genannt seien Phosphatpuffer, Carbonatpuffer, Zitratpuffer.
Als Netzmittel können Alkoholethoxylate/-propoxylate verwendet werden.
Des Weiteren enthalten die erfindungsgemäßen Mischungen vorzugsweise Neutralisationsmittel und Stellmittel zum Einstellen der Mittel auf eine Viskosität von 100 bis 2000 mPas, bevorzugt von ca. 600 mPas. Bevorzugte Stellmittel sind anorganische Salze, besonders bevorzugt Ammonium- oder Metallsalze, insbesondere von Halogeniden, Oxiden, Carbonaten, Hydrogencarbonaten, Phosphaten, Sulfaten und Nitraten, insbesondere Natriumchlorid. Als Neutralisationsmittel bevorzugt sind NaOH und KOH.

Als Elektrolyt können die erfindungsgemäßen Mittel anorganische und organische Salze enthalten. Geeignet sind Alkali-, Erdalkali-, Metall- oder Ammoniumhalogenide, -nitrate, -phosphate, -carbonate, -hydrogencarbonate, -sulfate, -silikate, acetate, -oxide, -citrate oder -polyphosphate. Bevorzugt eingesetzt werden beispielsweise CaCl₂, MgCl₂, LiCl, KCl, NaCl, K₂SO₄, K₂CO₃, MgSO₄, Mg(NO₃)₂, ZnCl₂, ZnO, MgO,ZnSO₄, CuSO₄, Cu(NO₃)₂.

Als organische Salze kommen Ammonium- oder Metallsalze, bevorzugt der Glykolsäure, Milchsäure, Zitronensäure, Weinsäure, Mandelsäure, Salicylsäure, Ascorbinsäure, Brenztraubensäure, Fumarsäure, Retinoesäure, Sulfonsäuren, Benzoesäure, Kojisäure, Fruchtsäure, Äpfelsäure, Gluconsäure, Galacturonsäure in Betracht. Als Elektrolyt können die Zusammensetzungen auch Mischungen verschiedener Salze enthalten.

Die erfindungsgemäßen Zusammensetzungen können Elektrolyte in Mengen von 0,01 bis 50 Gew.-%, bevorzugt 0,1 bis 20 Gew.-%, besonders bevorzugt 0,5 bis 10 Gew.-%, bezogen auf die biozide Zusammensetzung enthalten.

Als Sequestriermittel eignen sich beispielsweise Natriumtripolyphosphat (STPP), Ethylendiamintetraessigsäure (EDTA), deren Salze, Nitrilotriessigsäure (NTA), Polyacrylat, Phosphonat, beispielsweise 1-Hydroxyethan-1,1-diphosphonsäure (HEDP), Salze von Polyphosphorsäuren, wie Ethylendiamintetramethylephosphonsäure (EDTMP) und Diethylentriaminpentamethylenphosphonsäure (DTPMP), Oxalsäure, -salz, Zitronensäure, Zeolith, Carbonate und Polycarbonate.

Als Komplexbildner kommen Phosphonate, Aminophosphonate und Aminocarboxylate in Betracht.

Die erfindungsgemäßen bioziden Zusammensetzungen werden bevorzugt zur Konservierung von Farben, Lacken, Polymeremulsionen, Kühlschmierstoffen, Metallbearbeitungshilfsmitteln, Pflanzenschutzformulierungen, Bauchemikalien, Reinigungsmitteln, Plastik und Klebstoffen eingesetzt.

Die erfindungsgemäßen bioziden Zusammensetzungen können darüber hinaus unmittelbar oder in Verdünnung als Desinfektionsmittel verwendet werden.

Die erfindungsgemäßen bioziden Zusammensetzungen können darüber hinaus in Beschichtungsmaterialien für Oberflächen eingearbeitet werden. Oberflächen, die mit solchen Beschichtungsmaterialien beschichtet werden, werden dadurch biozid ausgerüstet.

Für alle genannten Anwendungen gelten die bereits genannten Einsatzmengen der bioziden Wirkstoffe.

Die bioziden Formulierungen besitzen bevorzugt einen pH-Wert von 1 bis 13, besonders bevorzugt 7 bis 12, insbesondere 8 bis 10.

### Beispiele

Die nachfolgenden Beispiele dienen der näheren Erläuterung der Erfindung. Alle Prozentangaben sind Gewichtsprozente, sofern nichts anderes angegeben ist.

**Tabelle 1: Lagerstabilität von 1,2-Benzisothiazolin-3-on, Na-Salz in verschiedenen Butylglykolethern bei 14 Tagen Lagerdauer**

| Beispiel | Biozide Wirksubstanz | Lösemittel | - 5°C | + 20°C | + 50°C |
|---|---|---|---|---|---|
| 1 | 1,2-Benzoisothiazolin-3-on-Na | Butylglykol | fest, starkes Kristallwachstum | klar, keine Kristalle | klar, keine Kristalle |
| 2 | 1,2-Benzisothiazolin-3-on-Na | Butyldiglykol | fest, starkes Kristallwachstum | klar, keine Kristalle | klar, keine Kristalle |
| 3 | 1,2-Benzoisothiazolin-3-on-Na | Butyltriglykol | klar, keine Kristalle | klar, keine Kristalle | klar, keine Kristalle |
| 4 | 1,2-Benzoisothiazolin-3-on-Na | Butylpolyglykol * | klar, keine Kristalle | klar, keine Kristalle | klar, keine Kristalle |

| | | | | | |
|---|---|---|---|---|---|
| *Butylpolyglykol: Homologengemisch aus 75 Gew.-% n-Butyltriglykol, 20 Gew.-% n-Butyltetraglykol, 3 Gew.-% n-Butylpentaglykol, 2 Gew.-% n-Butyldiglykol | | | | | |

### Beispiel 5

Für Lösungen von bioziden Wirkstoffen wurde ein besonders günstiges Viskositätsverhalten gefunden, wenn die bioziden Wirkstoffe zusammen mit Hydroxiden in Butylpolyglykol gelöst werden. Eine besonders vorteilhafte Formulierung unter Verwendung von 1,2 Benzisothiazolin-3-on-Na-Salz setzte sich folgendermaßen zusammen:
26,67 g Nipacide BIT (75%ig )
10,80 g NaOH (49%ig)
62,53 g Butylpolyglykol

Butylpolyglykol und NaOH wurden unter Rühren auf ca. 60-70°C erhitzt. Nach Zugabe von Nipacide BIT (1,2 Benzisothiazolin-3-on) wurde homogenisiert, bis eine klare Lösung entstanden ist.

Die Lösung hatte eine Viskosität von 26,6 mPa·s bei 40°C, 69,3 mPa·s bei 20°C, 192 mPa·s bei 5°C, 280 mPa·s bei 0°C und 408 mPa·s bei -5°C

**Tabelle 2: (Vergleichsbeispiele, nicht unter die Ansprüche fallend)**

| Beispiel | Biozide Wirksubstanz | Lösemittel | - 5°C | + 20°C | + 50°C |
|---|---|---|---|---|---|
| 6 | 2-Bromo-2-Nitropropandiol | Butylglykol | fest, starkes Kristallwachstum | klar, keine Kristalle | klar, keine Kristalle |
| 7 | 2-Bromo-2-Nitropropandiol | Butyldiglykol | fest, starkes Kristallwachstum | klar, keine Kristalle | klar, keine Kristalle |
| 8 | 2-Bromo-2-Nitropropandiol | Butyltriglykol | klar, keine Kristalle | klar, keine Kristalle | klar, keine Kristalle |
| 9 | 2-Bromo-2-Nitropropandiol | Butylpolyglykol * | klar, keine Kristalle | klar, keine Kristalle | klar, keine Kristalle |
| 10 | 1,2-Dibromo-2,4-dicyanobutan | Butylglykol | fest, starkes Kristallwachstum | klar, keine Kristalle | klar, keine Kristalle |
| 11 | 1,2-Dibromo-2,4-dicyanobutan | Butyldiglykol | fest, starkes Kristallwachstum | klar, keine Kristalle | klar, keine Kristalle |
| 12 | 1,2-Dibromo-2,4-dicyanobutan | Butyltriglykol | klar, keine Kristalle | klar, keine Kristalle | klar, keine Kristalle |
| 13 | 1,2-Dibromo-2,4-dicyanobutan | Butylpolyglykol * | klar, keine Kristalle | klar, keine Kristalle | klar, keine Kristalle |

| | | | | | |
|---|---|---|---|---|---|
| * Butylpolyglykol bedeutet die unter Tabelle 1 angegebene Zusammensetzung | | | | | |

## Patentansprüche

1. Zusammensetzungen, enthaltend
a) 5 bis 80 Gew.-% 1,2-Benzisothiazolin-3-on und/oder ihr Alkali- oder Ammoniumsalz,
b) 15 bis 80 Gew.-% mindestens eines Lösemittels gemäß der Formel I
R-(O-CH₂-CH₂)ₓ-O-H (I)
worin
R für eine lineare oder verzweigte Butylgruppe und
x für eine Zahl von 3 bis 10 steht.

2. Zusammensetzung nach Anspruch 1, worin R für n-Butyl steht.

3. Zusammensetzung nach Anspruch 1 oder 2, worin x für eine Zahl von 3 bis 6 steht.

4. Zusammensetzung nach einem oder mehreren der Ansprüche 1 bis 3, worin die Verbindung der Formel I eine Mischung ist, welche 50 Gew.-% oder mehr, Triethylenglykolbutylether und 10 Gew.-% oder mehr Tetraethylenglykolbutylether enthält.

5. Zusammensetzung nach einem oder mehreren der Ansprüche 1 bis 4 worin weniger als 20 Gew.-% Diethylenglykolbutylether enthalten sind.

6. Zusammensetzung nach einem oder mehreren der Ansprüche 1 bis 5, enthaltend
a) 1,2-Benzoisothiazolin-3-on
b) Chlor-2-methyl-4-isothiazolin-3-on
c) 2-Methyl-4-isothiazolin-3-on
d) 1,6-Dihydroxy-2,5-dioxahexan
e) ein Lösemittel gemäß Formel I.

7. Verwendung von 15 bis 80 Gew.-% mindestens einer Verbindung der Formel (I), wie in einem oder mehreren der Ansprüche 1 bis 5 definiert, als Lösemittel für biozide Wirksubstanzen, welche 1,2-Benzisothiazolin-3-on und/oder ihr Alkali- oder Ammoniumsalz enthalten, so dass 5 bis 80 Gew.-% 1,2-Benzisothiazolin-3-on und/oder ihr Alkali- oder Ammoniumsalz in der Lösung enthalten sind.

## Claims

1. A composition comprising
a) 5 to 80% by weight of 1,2-benzoisothiazolin-3-one and/or its alkali metal or ammonium salt,
b) 15 to 80% by weight of at least one solvent according to the formula I
R-(O-CH₂-CH₂)ₓ-O-H (I)
in which
R is a linear or branched butyl group and
x is a number from 3 to 10.

2. The composition as claimed in claim 1, in which R is n-butyl.

3. The composition as claimed in claim 1 or 2, in which x is a number from 3 to 6.

4. The composition as claimed in one or more of claims 1 to 3, in which the compound of the formula I is a mixture which comprises 50% by weight or more of triethylene glycol butyl ether and 10% by weight or more of tetraethylene glycol butyl ether.

5. The composition as claimed in one or more of claims 1 to 4, in which less than 20% by weight of diethylene glycol butyl ether are present.

6. The composition as claimed in one or more of claims 1 to 5, comprising
a) 1,2-benzoisothiazolin-3-one
b) chloro-2-methyl-4-isothiazolin-3-one
c) 2-methyl-4-isothiazolin-3-one
d) 1,6-dihydroxy-2,5-dioxahexane
e) a solvent according to formula 1.

7. The use of 15 to 80% by weight of at least one compound of the formula (I) as defined in one or more of claims 1 to 5 as solvent for biocidal active substances which comprise 1,2-benzoisothiazolin-3-one and/or its alkali metal or ammonium salt, such that 5 to 80% by weight of 1,2-benzoisothiazolin-3-one and/or its alkali metal or ammonium salt are present in the solution.

## Revendications

1. Compositions, contenant
a) de 5 à 80 % en poids de 1,2-benzisothiazolin-3-one et/ou de son sel d'ammonium ou de métal alcalin,
b) de 15 à 80 % en poids d'au moins un solvant selon la formule I
R-(O-CH₂-CH₂)ₓ-O-H (I)
dans laquelle
R représente un groupe butyle linéaire ou ramifié et
x représente un nombre allant de 3 à 10.

2. Composition selon la revendication 1, dans laquelle R représente le groupe n-butyle.

3. Composition selon la revendication 1 ou 2, dans laquelle x représente un nombre entier allant de 3 à 6.

4. Composition selon une ou plusieurs des revendications 1 à 3, dans laquelle le composé de formule I est un mélange qui contient 50 % en poids ou plus d'éther butylique de triéthylèneglycol et 10 % en poids ou plus d'éther butylique de tétraéthylèneglycol.

5. Composition selon une ou plusieurs des revendications 1 à 4, dans laquelle sont contenus moins de 20 % en poids d'éther butylique de diéthylèneglycol.

6. Composition selon une ou plusieurs des revendications 1 à 5, contenant
a) de la 1,2-benzo-isothiazolin-3-one
b) de la chloro-2-méthyl-4-isothiazolin-3-one
c) de la 2-méthyl-4-isothiazolin-3-one
d) du 1,6-dihydroxy-2,5-dioxahexane
e) un solvant selon la formule I.

7. Utilisation de 15 à 80 % en poids d'au moins un composé de formule (I), telle que définie dans une ou plusieurs des revendications 1 à 5, en tant que solvant pour des substances à activité biocide qui contiennent de la 1,2-benzisothiazolin-3-one et/ou son sel d'ammonium ou de métal alcalin, de sorte que sont contenus dans la solution de 5 à 80 % en poids de 1,2-benzisothiazolin-3-one et/ou de son sel d'ammonium ou de métal alcalin.
